# FASCICULE DE BREVET EUROPEEN

(11) **EP 2 425 166 B1**
(45) Date de publication et mention de la délivrance du brevet: **18.09.2013**
(21) Numéro de dépôt: 10715275.3
(22) Date de dépôt: 28.04.2010
(51) Int. Cl.: G06K 19/077, G06K 19/06

(54) **SYSTEME D'IDENTIFICATION DE JONCTIONS D'ÉLÉMENTS A ASSEMBLER DESTINES A FORMER UN MONTAGE TEL QUE NOTAMMENT UN PIPELINE OU UN RÉSERVOIR ET PROCEDE D'IDENTIFICATION MIS EN OEUVRE DANS UN TEL SYSTEME**
SYSTEM ZUR IDENTIFIKATION VON VERBINDUNGEN VON ZUSAMMENZUFÜGENDEN ELEMENTEN, DIE EINE ANORDNUNG, INSBESONDERE EINE ROHRLEITUNG ODER EINEN TANK, BILDEN SOLLEN, UND IN SOLCH EINEM SYSTEM VERWENDETES IDENTIFIKATIONSVERFAHREN
SYSTEM FOR IDENTIFYING JOINTS OF ELEMENTS TO BE ASSEMBLED INTENDED FOR FORMING AN ASSEMBLY SUCH AS, IN PARTICULAR, A PIPELINE OR A TANK, AND IDENTIFICATION METHOD USED IN SUCH A SYSTEM

(30) Priorité: 29.04.2009 FR 0952823
(43) Date de publication de la demande: 07.03.2012
(73) Titulaire: Serimax Société Par Actions Simplifiée, 77290 Mitry Mory (FR)
(72) Inventeur: CASTREC, Frédéric, F-77290 Mitry Mory (FR); GRAINDOR, Guillaume, F-75016 Paris (FR); HIGELIN, Olivier, F-93250 Villemonble (FR)
(74) Mandataire: de Kernier, Gabriel
(86) Numéro de dépôt international: PCT/EP2010/055728
(87) Numéro de publication internationale: WO 2010/125108

(56) Documents cités:
- EP-A- 1 262 272
- WO-A-2004/010163
- GB-A- 2 208 310
- GB-A- 2 377 584
- US-A- 5 620 625

## Description

La présente invention concerne un système d'identification de jonctions d'éléments à assembler destinés à former un montage tel que notamment un pipeline ou un réservoir de composé à base d'hydrocarbure.

L'invention concerne aussi un procédé d'identification mis en oeuvre dans un tel système.

L'invention trouve d'importantes applications, notamment dans le domaine de la construction et la surveillance des pipelines transmettant des fluides tels que gaz, pétrole, eau etc. Ces pipelines sont formés par un assemblage de tubes au moyen de soudures qui restent une opération délicate et qui doivent être faites avec soin. Le problème important est donc de d'assurer de la qualité des jonctions entre ces tubes. D'une part, il faut effectuer, sur le terrain, des soudures de bonne qualité par des personnes qualifiées et, d'autre part, lors de contrôles ultérieurs, il faut identifier chacune de ces jonctions soudées et donc il faut les identifier avec certitude. Pour résoudre ce problème de qualité, l'identification des jonctions est primordiale.

Le document de brevet CN192147 décrit un système qui détecte la qualité de soudage et transmet ensuite l'information de qualité via un réseau de transmission de données. Cependant ce document ne donne aucune description satisfaisante de moyens pour identifier l'emplacement où a été effectuée la soudure.

EP 1 262 272 A1 divulgue un procédé et un dispositif pour consigner automatiquement le processus de montage d'une tuyauterie construite en assemblant des pièces de tuyauterie entre elles. Avant l'assemblage, on acquiert des données spécifiques aux pièces de tuyauterie à assembler, que l'on mémorise en relation avec un identifiant unique de processus. À partir de ces données spécifiques, on peut également générer un identifiant de pièce unique pour chacune des pièces de tuyauterie à assembler. Cet identifiant peut être mémorisé en relation avec l'identifiant de processus.

Une autre application importante pour la présente invention concerne la confection de réservoir pour des composés à base d'hydrocarbure se basant sur un assemblage de tôles.

Pour obtenir des soudures de bonne qualité, l'invention propose un système du genre mentionné dans le préambule qui fournit une identification simple et sans ambiguïté des jonctions soudées en vue de faciliter les opérations de fabrication, de contrôle et de maintenance d'un réseau pipe-line ou tout autre montage tels que réservoir et aussi, assemblage de poutrelles.

Conformément à l'invention, le système comprend les caractéristiques définies dans la revendication 1.

Conformément à l'invention le procédé d'identification mis en oeuvre dans un tel système est remarquable en ce qu'il comporte les étapes suivantes :
- saisie de codes d'identification des éléments concernés par une jonction entre-eux,
- combinaison desdits codes d'identification des éléments,
- fourniture du code de jonction à partir du code combiné.

La description suivante accompagnée des dessins ci-annexés, le tout donné à titre d'exemple non limitatif, fera bien comprendre comment l'invention peut être réalisée. Dans les dessins:
la figure 1 montre un système conforme à l'invention appliqué à la jonction de tubes constituant un pipe-line.
la figure 2 montre un système conforme à l'invention apte à lire une pluralité de types d'identifiants.
la figure 3 montre un système conforme à l'invention appliqué à la jonction de tôles constituant un réservoir.
la figure 4 montre plus en détail la jonction entre les tôles du réservoir de la figure 3 pour des tôles ayant un seul code d'identification.
la figure 5 entre les tôles du réservoir de la figure 3 pour des tôles ayant des codes d'identification latéraux.
la figure 6 montre un système conforme à l'invention appliqué à la jonction de poutrelles.

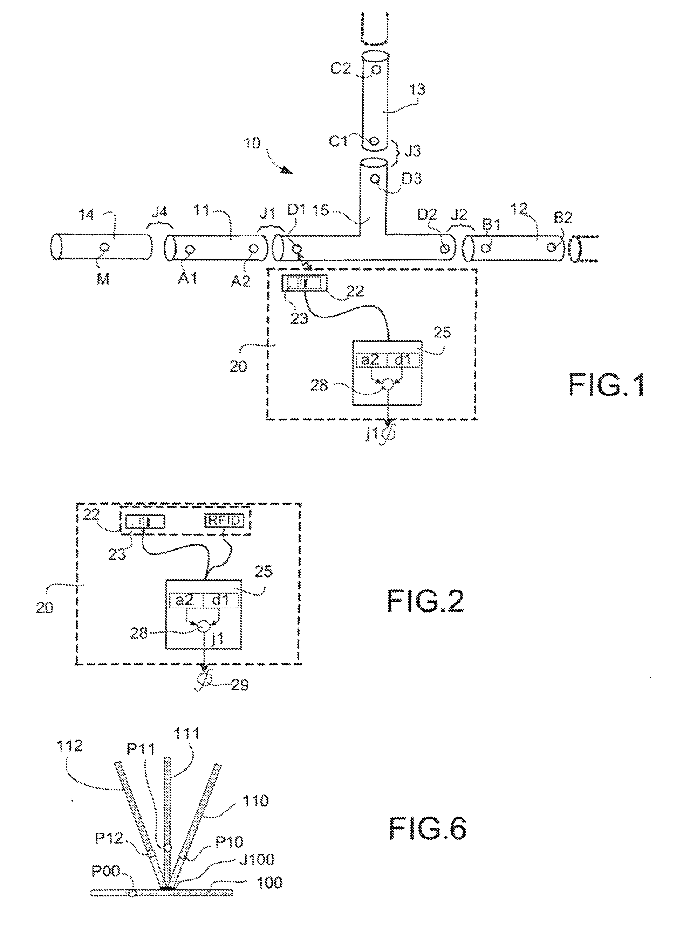

A la figure 1, la référence 10 représente une vue partielle d'un réseau pipe-line formé d'un ensemble d'éléments, dans ce mode de réalisation, des tubes, reliés ensemble au moyen de soudures. L'ensemble de tubes représentés sur cette figure comporte les tubes 11, 12, 13 et 14. En outre, une dérivation 15, qui est formée en fait d'éléments de tubes solidement reliés entre eux, interconnecte les tubes 11, 12 et 13. Cette dérivation 15 est considérée dans le présent mémoire comme un tube ayant plusieurs extrémités. Les dérivations sont fabriquées par moulage, notamment, et en pratique elles ne sont pas susceptibles de présenter des fuites entre les tubes constituant cette dérivation.

Sur la figure 1, pour des raisons de clarté, on a représenté d'une manière éclatée les différentes jonctions entre ces tubes et la dérivation 15. La jonction J1 relie une première extrémité du tube 11 avec une première extrémité de la dérivation 15, la jonction J2 relie une première extrémité du tube 12 avec une deuxième extrémité de la dérivation 15 et la jonction J3, une première extrémité du tube 13 avec une troisième extrémité de la dérivation 15. Une autre jonction J4 relie la deuxième extrémité du tube 11 avec une première extrémité du tube 14.

Lors de leur fabrication, ces tubes sont munis d'identifiants. Ces identifiants peuvent soit être uniques, soit être multiples, un identifiant pouvant être affecté à chaque extrémité de tube. Cet identifiant est qualifié d'identifiant de chanfrein.

Ainsi le tube 11 est muni d'identifiants A1 et A2 à chacune de ses extrémités, le tube 12 est muni d'ïdentifïants B1, B2 et le tube 13, d'identifiants C1, C2. La dérivation 15 est munie des identifiants D1, D2 et D3. Le tube 14 comporte, lui, un seul identifiant M placé, par exemple, au milieu. Chacun des identifiants mentionnés est porteur d'un code d'identification référencés par les mêmes lettres que les identifiants mais en minuscule. Aux différents identifiants mentionnés A1, A2, B1, 82, C1, C2, D1, D2, D3 et M sont associés respectivement les codes « a1», « a2 », « b1 », « b2 » « c1 », « c2 », « d1 » « d2 », « d3 » et « m ».

On se propose donc d'identifier les différentes jonctions J1, J2 et J3 entre ces tubes et la dérivation 15 et aussi la jonction J4 entre les tubes 11 et 14. Pour cela, il est prévu un système d'identification de jonctions 20 formé à partir d'un lecteur d'identifiants 22 pour lire les codes contenus dans les différents identifiants A1, A2, B1, B2, C1, C2, C3 et M. Il est prévu aussi un dispositif de gestion 25 pour fournir un code d'identification de jonction entre deux conduits à partir des codes d'identification de tube desdits deux tubes. Ceci est effectué par un dispositif de combinaison 28. Le code d'identification de jonction est rendu disponible à la borne 29.

A la figure 1, on montre l'exemple de l'identification de la jonction J1. Le lecteur d'identifiant 22 comporte une tête de lecture 31 pour la lecture de codes-barres. Il lit le code des identifiants se présentant donc sous la forme de codes barres. Après lecture des codes barres « a2 » et « d1 » des identifiants du tube 11 et de la première extrémité de la dérivation 15 situés de part et d'autre de la jonction J1, le dispositif de combinaison 28 détermine le code identifiant cette jonction J1. Ce dispositif de combinaison peut opérer par concaténation des deux codes ou effectuer d'autre opération de juxtaposition telle que dérivation de ces codes pour obtenir un autre code en prélevant des parties caractéristiques des codes.

Comme il l'a été déjà dit, le tube 14 comporte un seul identifiant de tube M apposé au milieu, par exemple, de ce tube 14 destiné à se rabouter sur le tube 11 pour former ainsi la jonction J4. Le code de cette jonction sera donc formulé par une combinaison des codes « m » et « al ».

Il va de soi qu'il est possible aussi de noter ces codes à la main et d'identifier de façon manuelle le code définissant la jonction.

Ces identifiants peuvent aussi se présenter sous forme d'étiquettes RFID c'est-à-dire des étiquettes de radio-identification mieux connus sous la dénomination anglo-saxonne : « Radio Frequency Identification ».

On peut avoir affaire à des tubes portant des identifiants de type codes-barres ou du type RFID. Pour cela, le système comporte un lecteur d'identifiants comportant la tête de lecture de codes barres 22 et d'une tête de lecture pour étiquette RFID 32, comme cela et montré à la figure 2. L'utilisateur doit donc choisir la tête de lecture à utiliser en fonction de la nature des identifiants.

L'invention couvre donc les applications concernant ces deux types d'identifiants en combinaison ou d'une manière séparée et couvre aussi tout autre type d'identifiants considérés d'une manière séparée ou en combinaison.

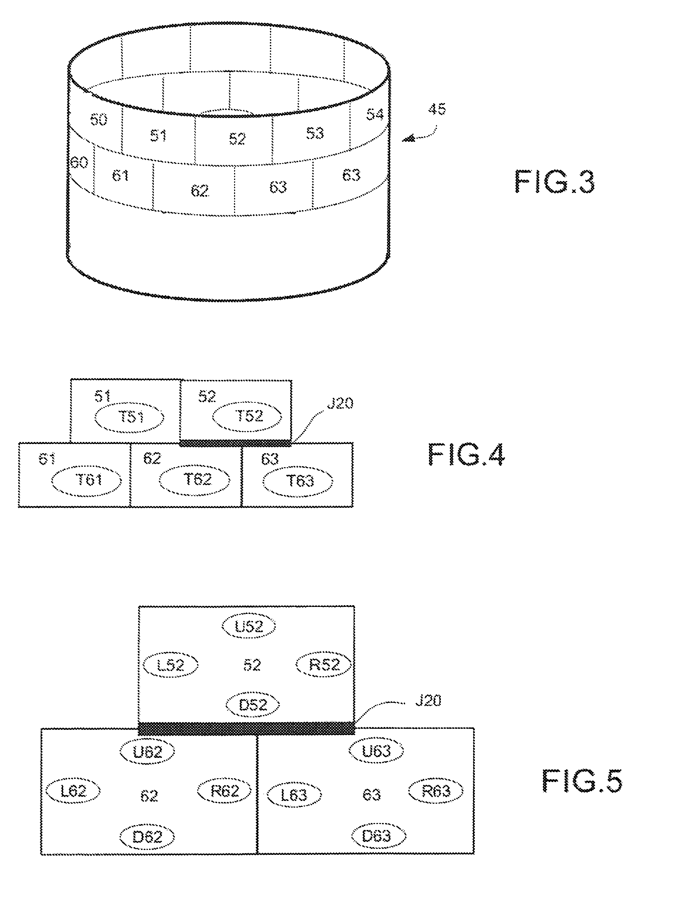

La figure 3 montre une autre application de l'invention qui a trait à la confection de réservoir d'hydrocarbures par exemple. Le réservoir 45 est formé d'une pluralité de tôles .... 50, 51, .52, ....60, 61, 62, 63, ...Ces tôles sont donc assemblées pour former ce réservoir. Elles sont disposées les unes sur les autres en chevauchement. Ainsi, comme montré aux figures 4 et 5, la tôle 51 repose à la fois sur la tôle 61 et sur la tôle 62. La tôle 52 qui jouxte la tôle 51 repose sur les tôles 62 et 63. Ces tôles sont ainsi soudées entre-elles. Pour identifier il faut donc combiner l'identification des tôles impliquées dans une soudure. Ainsi la soudure J20 reliant les tôles 52 avec les tôles 61 et 63 est repérée au moyen des identifiants de celles-ci.

Si les tôles 52, 61, 62 ont un seul identifiant, la jonction est identifiée par les codes t52, t61, t62 respectifs contenus par les identifiants T52, T61, T62.La jonction J20 peut être identifiée par la concaténation de ces codes c'est-à-dire par « t52 t61 t62 ».

Comme cela est représenté à la figure 5, il est possible aussi que les tôles soient munies d'identifiants affectés, chacun, à leur côté en vue de fournir, un code latéral. Ces codes peuvent être 151, u51, r51 et d51 pour respectivement des identifiants L51, U51, R51 et D51 affectés à la tôle 51. l62, u62, r62 et d62 à la tôle 61 et 163, u63, r63 et r63 à la tôle 63. Le code identifiant la jonction J20 devient alors : « u62 d52 u63 »

Bien entendu l'invention s'applique au cas où des tôles ont des codes latéraux et des codes uniques pour l'élaboration d'un même réservoir.

Un autre exemple d'application est celui du raccord de poutrelles ou autres profilés, comme cela est représenté à la figure 6. Sur cette figure 6 plusieurs éléments de poutrelles 100, 110 111 et 112 sont réunis par une jonction soudée J100. Là encore pour identifier cette jonction J100, on utilise les codes d'identification p00, p 10, p11, p12 contenus dans des identifiants P00, P10, P11, P12 que peuvent porter respectivement les différentes poutrelles 100, 110 111 et 112. Le code d'identification de la jonction est de la forme « p00, p10, p11, p12 »

## Revendications

1. Système d'identification de jonctions d'éléments à assembler (11, 12, 13 14, 15; 50, 51, 52...; 100, 110, 111, 112) destinés à former un montage (10), tel que notamment un pipeline ou un réservoir, pour lequel il est prévu pour chaque élément au moins un identifiant d'élément (A2, B1, B2, C1, C2, C3 et M; T51, T52...; P00, P10, P11, P12) pour un code d'identification d'élément, ledit système étant muni d'un lecteur d'identifiant d'élément (22) et d'un dispositif de gestion (25), caractérosé en ce que le dispositif de gestion (25) est agencé pour fournir des codes d'identification de jonction entre des éléments joints à partir des codes d'identification des éléments joints, au moyen d'un dispositif de combinaison (28).

2. Système d'identification selon la revendication 1 **caractérisé en ce que** le dispositif de combinaison (28) opère par concaténation sur les codes d'identification des éléments impliqués par la jonction pour former le code d'identification de la jonction.

3. Système d'identification selon la revendication 1 ou 2 pour lequel au moins un élément (14) comporte un seul identifiant de tube (M) utilisé pour former le code d'identification de la jonction.

4. Système d'identification selon la revendication 1 à 3 pour lequel au moins un élément comporte des identifiants d'extrémité de tube pour un code d'identification d'extrémité d'élément affecté à chacune des extrémités des éléments pour former le code d'identification de jonction à partir des codes d'identification d'élément ou d'extrémité situés de part et d'autre de la jonction.

5. Système d'identification selon l'une des revendications 1 à 4 pour lequel les identifiants sont constitués par une inscription de type code barre, **caractérisé en ce que** le lecteur d'identifiant comporte une tête de lecture de codes-barres.

6. Système d'identification selon l'une des revendications 1 à 4, pour lequel les identifiants sont constitués par des étiquettes de type RFID, **caractérisé en ce que** le lecteur d'identifiant comporte une tête de lecture de code pour étiquettes RFID.

7. Système d'identification selon l'une des revendications 1 à 3, pour lequel les identifiants sont constitués par des inscriptions de type codes barres et d'autres par des étiquettes de type RFID **caractérisé en ce que** le lecteur d'identifiant comporte une tête de lecture de codes-barres et une tête de lecture de code pour étiquettes RFID.

8. Système d'identification selon l'une des revendications 1 à 7 **caractérisé en ce que** les éléments sont des tubes pour pipelines

9. Système d'identification selon l'une des revendications 1 à 7 **caractérisé en ce que** les éléments sont des tôles (51, 52...) pour constituer un réservoir.

10. Système d'identification selon l'une des revendications 1 à 7 **caractérisé en ce que** les élements sont du type poutrelle (100, 110, 111, 112).

11. Procédé d'identification mis en oeuvre dans un système selon l'une des revendications 1 à 10 **caractérisé en ce qu'**il comporte les étapes suivantes:
- saisie de codes d'identification des éléments concernés par une jonction entre-eux.
- combinaison desdits codes d'identification des éléments,
- fourniture du code de jonction à partir du code combiné.

## Patentansprüche

1. System zur Identifikation von Verbindungen von zusammenzufügenden Elementen (11, 12, 13, 14, 15; 50, 51, 52, ....; 100, 110, 111, 112), die eine Anordnung (10), insbesondere eine Rohrleitung oder einen Tank bilden sollen, bei dem für jedes Element mindestens ein Kennzeichen (A2, B1, B2, C1, C2, C3 und M; T51, T52, ....; P00, P10, P11, P12) des Elements für einen Identifikationscode des Elements vorgesehen ist, wobei das System mit einem Gerät (22) zum Lesen des Kennzeichens des Elements und einer Verarbeitungsvorrichtung (25) versehen ist, **dadurch gekennzeichnet, dass** die Verarbeitungsvorrichtung (25) so angeordnet ist, um Identifikationscodes für die Verbindung zwischen den verbundenen Elementen ausgehend von den Identifikationscodes der verbundenen Elemente mittels einer Kombinationsvorrichtung (28) zu liefern.

2. Identifikationssystem nach Anspruch 1, **dadurch gekennzeichnet, dass** die Kombinationsvorrichtung (28) mit einer Verknüpfung der Codes zur Identifikation der an der Verbindung beteiligten Elemente arbeitet, um den Code zur Identifikation der Verbindung zu bilden.

3. System zur Identifikation nach Anspruch 1 oder 2, bei dem mindestens ein Element (14) ein einziges Rohrkennzeichen (M) aufweist, welches verwendet wird, um den Identifikationscode der Verbindung zu bilden.

4. System zur Identifikation nach den Ansprüchen 1 bis 3, bei dem mindestens ein Element Kennzeichen des Rohrendes für einen Identifikationscode des Endes des betroffenen Elements an jedem der Enden der Elemente aufweist, um den Identifikationscode der Verbindung ausgehend von den Identifikationscodes des Elements oder des Endes zu bilden, die zu beiden Seiten der Verbindung gelegen sind.

5. System zur Identifikation nach einem der Ansprüche 1 bis 4, bei dem die Kennzeichen aus einer Beschriftung vom Typ Strichcode bestehen, **dadurch gekennzeichnet, dass** das Gerät zum Lesen der Kennzeichen einen Strichcode-Lesekopf aufweist.

6. System zur Identifikation nach einem der Ansprüche 1 bis 4, bei dem die Kennzeichen aus Etiketten vom Typ RFID sind, **dadurch gekennzeichnet, dass** der Kennzeichen-Leser einen Lesekopf für Codes auf RFID-Etiketten aufweist.

7. System zur Identifikation nach einem der Ansprüche 1 bis 3, bei dem die Kennzeichen aus Beschriftungen vom Typ Strichcode und andere aus Etiketten vom Typ RFID bestehen, **dadurch gekennzeichnet, dass** das Kennzeichen-Lesegerät einen Strichcode-Lesekopf und einen Code-Lesekopf für RFID-Etiketten aufweist.

8. System zur Identifikation nach einem der Ansprüche 1 bis 7, **dadurch gekennzeichnet, dass** die Elemente Rohre für Rohrleitungen sind.

9. System zur Identifikation nach einem der Ansprüche 1 bis 7, **dadurch gekennzeichnet, dass** die Elemente Bleche (51, 52, ...) sind zur Bildung eines Tanks.

10. System zur Identifikation nach einem der Ansprüche 1 bis 7, **dadurch gekennzeichnet, dass** die Elemente Stahlträger (100, 110, 111, 112) sind.

11. Verfahren zur Identifikation ausgeführt in einem System nach einem der Ansprüche 1 bis 10, **dadurch gekennzeichnet, dass** es folgende Schritte aufweist:
- Erfassen der Identifikationscodes von an einer Verbindung beteiligten Elementen untereinander,
- Kombination der Identifikationscodes der Elemente und
- Bereitstellung des Codes der Verbindung ausgehend von dem kombinierten Code.

## Claims

1. System for identifying joins of elements to be connected together (11, 12, 13 14, 15; 50, 51, 52, ...; 100, 110, 111, 112) intended to form an assembly (10), such as in particular a pipeline or a tank, for which each element is provided with at least one element identifier (A2, B1, B2, C1, C2, C3 and M; T51, T52, ...; p00, p10, p11, p12) for an element identification code, said system being provided with an element identifier reader (22) and a management device (25), **characterized in that** the management device (25) is arranged for supplying identification codes for the join between the joined elements based on the identification codes of the joined elements, by means of a combination device (28).

2. Identification system according to claim 1, **characterized in that** the combination device (28) operates by concatenation of the identification codes of the elements involved in the join in order to form the identification code of the join.

3. Identification system according to claim 1 or 2, for which at least one element (14) comprises a single tube identifier (M) used to form the identification code of the join.

4. Identification system according to claims 1 to 3, for which at least one element comprises tube end identifiers for an element end identification code placed at each of the ends of the elements to form the identification code of the join based on the element or end identification codes situated on either side of the join.

5. Identification system according to one of claims 1 to 4, for which the identifiers are constituted by a legend of the barcode type, **characterized in that** the identifier reader comprises a barcode read head.

6. Identification system according to one of claims 1 to 4, for which the identifiers are constituted by tags of the RFID type, **characterized in that** the identifier reader comprises an RFID tag code read head.

7. Identification system according to one of claims 1 to 3, for which some of the identifiers are constituted by legends of the barcode type and others by tags of the RFID type, **characterized in that** the identifier reader comprises a barcode read head and an RFID tag code read head.

8. Identification system according to one of claims 1 to 7, **characterized in that** the elements are tubes for pipelines.

9. Identification system according to one of claims 1 to 7, **characterized in that** the elements are plates (51, 52, ...) for constructing a tank.

10. Identification system according to one of claims 1 to 7, **characterized in that** the elements are of the beam type (100, 110, 111, 112).

11. Identification method implemented in a system according to one of claims 1 to 10, **characterized in that** it comprises the following steps:
- entering the identification codes of the elements involved in a join between them,
- combining said element identification codes,
- providing the join code on the basis of the combined code.
